# FASCICULE DE BREVET EUROPEEN

(11) **EP 1 461 559 B1**
(45) Date de publication et mention de la délivrance du brevet: **13.02.2008**
(21) Numéro de dépôt: 02799120.7
(22) Date de dépôt: 26.12.2002
(51) Int. Cl.: F16L 11/12

(54) **CONDUITE RIGIDE ENROULABLE CHAUFFEE POUR LE TRANSPORT DES FLUIDES, NOTAMMENT D'HYDROCARBURES**
STEIFE, BEHEIZBARE UND AUFROLLBARE LEITUNG FÜR DEN TRANSPORT VON FLUIDEN, IN ERSTER LINIE VON KOHLENWASSERSTOFFEN
HEATED WINDABLE RIGID DUCT FOR TRANSPORTING FLUIDS, PARTICULARLY HYDROCARBONS

(30) Priorité: 29.12.2001 GB 0131084; 31.05.2002 FR 0206679
(43) Date de publication de la demande: 29.09.2004
(73) Titulaire: Technip France, 92400 Courbevoie (FR)
(72) Inventeur: DENNIEL, Sylvain, Aberdeen AB 15 7XY (GB); MALONE, Neil Shaw, Knutsford, Cheshire WA 16 6PE (GB)
(74) Mandataire: Bertrand, Didier
(86) Numéro de dépôt international: PCT/FR2002/004566
(87) Numéro de publication internationale: WO 2003/060368

(56) Documents cités:
- US-A- 5 172 765
- US-A1- 2001 025 664

## Description

La présente invention concerne une conduite rigide enroulable chauffée destinée au transport de fluides tels que des hydrocarbures, notamment en milieu sous-marin.

Dans des applications liées aux conduites de transport d'hydrocarbures utilisées offshore, il existe un besoin de conserver un niveau de température à la conduite durant le service ainsi que lors des arrêts et des redémarrages de production. Pour cela, la plupart des conduites sont munies de moyens d'isolation thermique qui contribuent à maintenir un niveau de température acceptable. Toutefois, dans certains cas, la solution de l'isolation thermique ne suffit pas à maintenir le niveau de température requis et la conduite doit donc être chauffée de manière active, c'est-à-dire par un apport de chaleur qui ne provient pas du fluide transporté. Cette solution de chauffage actif des conduites est utilisée dans certaines applications spécifiques conjointement avec l'isolation thermique précédemment évoquée, elle est notamment préconisée lorsque la conduite doit rencontrer en services des périodes importantes d'arrêt de production.

Les conduites concernées par la présente invention sont de type rigide, par opposition aux conduites dites flexibles. La pose d'un tube ou conduite rigide sur un fond marin est effectuée le plus souvent à partir d'un navire dit de pose. La pose est dite en S lorsque le tube affecte la forme d'un S entre le navire de pose et le fond marin et elle est dite en J lorsque le tube affecte la forme d'un J. Dans ce dernier cas, une rampe de guidage est prévue sur le navire de pose, laquelle rampe peut être parfois immergée partiellement dans l'eau. Ces opérations de pose sont décrites dans le document API (American Petroleum Institute) Recommended Practice 17 A de 1987.

Selon ces techniques, le tube rigide à poser peut être stocké sur le navire de pose en tronçons de tube de longueur donnée mais relativement courte, les tronçons de tube étant reliés ensemble au fur et à mesure de la pose. Selon une autre technique, dite du rigide déroulé, adaptée également aux conduites à double enveloppe, la conduite est fabriquée en grandes longueurs à terre et enroulée sur une bobine de stockage située sur le bateau de pose ; la conduite est alors déroulée de ladite bobine pendant l'opération de pose. C'est ce dernier type de conduite rigide, mais enroulable sur des bobines de grand diamètre, qui est concerné par l'invention. La technique du rigide déroulé présente des avantages certains par rapport aux techniques de pose en J ou en S : les opérations de pose sont plus rapides puisque la conduite est déjà assemblée à terre, même si, en revanche, le chargement du navire de pose et la fabrication (assemblage de la conduite) sont des opérations sensiblement plus longues. Par ailleurs la fabrication à terre de la conduite (soudure, contrôle) s'effectue dans un environnement plus clément.

La conduite rigide enroulable concernée par l'invention est de type à double enveloppe. Une conduite à double enveloppe, couramment appelée "pipe-in-pipe" dans la profession pétrolière, constituée de deux tubes coaxiaux respectivement intérieur et extérieur, séparés par un espace annulaire. Le tube intérieur, ou "flowline", sert à véhiculer l'hydrocarbure. Le tube extérieur, ou "carrier pipe" crée un espace annulaire qui peut être utilisé pour différentes fonctions (isolation, chauffage, surveillance, logement de conduites secondaires). Une isolation thermique peut notamment être utile pour éviter le refroidissement du fluide transporté et la formation d'hydrates, la survenue de ces hydrates étant notamment liée aux arrêts de production ; l'espace annulaire peut aussi contenir des passages de fluides divers (eau, air, liquide de chauffage, etc.), ainsi que des câbles électriques (pour le chauffage ou le transport d'un signal électrique, etc.). Pour que la conduite à double enveloppe conserve son intégrité au cours des diverses opérations ainsi qu'en service, on utilise des dispositifs auxiliaires tels que des entretoises annulaires, des centraliseurs ou des limiteurs de propagation de déformation radiale par exemple.

On connaît des systèmes de chauffage actif situés dans l'annulaire de conduites à double enveloppe. Ces systèmes utilisent par exemple des tubes secondaires enroulés permettant la circulation d'un fluide caloporteur ou utilisent directement l'annulaire pour faire circuler le fluide caloporteur. D'autres utilisent l'énergie électrique de manière directe (GB 2,084,284) ou utilisent des câbles électriques chauffants.

Toutefois, lorsqu'on utilise la technique du rigide déroulé, la conduite devant être préalablement enroulée sur une roue, les systèmes de chauffage actif à câbles chauffants ne peuvent être utilisés tels quels en raison des contraintes d'allongement existant sur l'extrados de la conduite et la compression existant sur l'intrados. La solution à ce problème consiste donc à déposer les câbles utilisés avec une longueur plus importante (surlongueur) pour pouvoir supporter les allongements.

Pour ce faire, les câbles peuvent être disposés en vague (de manière sinusoïdale, comme illustré sur la figure annexée 1, qui montre les câbles 5 disposés en vague sur le tube intérieur d'une conduite 1 à deux enveloppes 2, 3 et isolation thermique 4) ou être enroulés de manière hélicoïdale autour de la conduite interne. Ils peuvent également être enroulés selon une autre technique connue en soi, celle de l'enroulement S/Z.

Une solution approchante ayant pour but de permettre la flexion d'une conduite à simple enveloppe est présentée par le document WO 86/03362. Dans cette demande, le câble est disposé en vague sinusoïdale de très faible amplitude et de faible pas (période) pour pouvoir supporter l'allongement ou la compression lors de la flexion de la conduite.

Les solutions envisagées jusqu'ici présentent des inconvénients : augmentation de la longueur du câble, augmentation de la résistance électrique (augmentation de la puissance nécessaire au chauffage), augmentation des coûts de fabrication (machine d'enroulement S/Z ou hélicoïdale ou assujettissement des câbles au tube interne par des adhésifs, solution en vague), problème lié au positionnement du câble qui risque de se décoller du tube interne, réduisant d'autant l'efficacité du système de chauffage quelle que soit la solution choisie.

Un autre inconvénient est le problème lié à l'isolation thermique et à son installation en liaison avec les câbles (la largeur des gorges réalisées pour permettre la disposition en vague des câbles diminue la quantité d'isolant qui peut être disposée dans l'annulaire).

DE-U-9000710 concerne une conduite à double enveloppe et câble de chauffage, non enroulable selon le préambule de la revendication 1. Le document DE-U-8712831 concerne le problème de la dilatation thermique des conduites au voisinage du câble de chauffage.

Le but de l'invention est de proposer une conduite rigide enroulable à double enveloppe, chauffée par des câbles, qui ne présente pas ces inconvénients.

L'invention atteint son but grâce à une conduite rigide enroulable à double enveloppe, telle que revendiquée dans la revendication 1, moyennant quoi le câble peut suivre les déformations de l'extrados de la conduite lorsque celle-ci est amenée à prendre des courbures lors de l'enroulement sur bobine ou lors de la pose.

Il est donc possible et avantageux de positionner le ou les câbles de chauffage parallèlement à l'axe longitudinal de la conduite, et notamment le long d'une ou de plusieurs génératrices du tube intérieur.

De la sorte, le câble est facile à installer sur les conduites, sans avoir recours à des machines compliquées comme des spiraleuses ou analogue. De plus, cette disposition rectiligne du câble est également avantageuse en raison des accessoires nombreux qui sont utilisés dans la technique de la conduite à double enveloppe. Ainsi la mise en place des centraliseurs, cloisons étanches (en anglais "bulkheads", "waterstops") ainsi que leur mise en oeuvre se trouve facilitée par la simplicité d'installation des câbles chauffants ainsi que leur positionnement rectiligne longitudinal.

D'autre part, du fait que le câble est en ligne droite et donc plus court que dans une solution où il est ondulé, le gain en longueur entraîne une diminution proportionnelle de la résistance électrique, du système et donc un gain en puissance pour une tension donnée, ou la possibilité d'équiper une conduite plus longue pour une même tension.

Avantageusement, le câble est également capable de supporter la compression tout en restant au contact du tube interne. Ainsi, sur l'intrados, le câble chauffant n'a pas tendance à se décoller du tube.

Avantageusement, on utilise un câble chauffant plat, donnant une meilleure efficacité de transfert thermique.

Le câble est avantageusement un câble tressé plat, comportant une tresse conductrice centrale d'éléments allongés, entourée d'au moins une gaine d'isolation électrique et de préférence deux.

De préférence, les matériaux constituant le câble se déforment élastiquement en restant en dessous de 15% de leur limite élastique et préférentiellement en dessous de 5%. On entend par matériaux constituant le câble les gaines et les éléments allongés formant la tresse, puisque le câble supporte l'allongement grâce à la réorganisation (déflexion angulaire) desdits éléments allongés qui seront très faiblement contraints pendant l'allongement du câble.

Avantageusement la conduite de l'invention comprend des dispositifs d'étanchéité de l'espace annulaire entre les tubes coaxiaux, agencés pour recevoir des sections de câble chauffant.

Avantageusement, il est prévu de place en place sur le circuit d'alimentation électrique associée à la conduite des boîtes de connexion rétablissant automatiquement localement la connexion entre phases en cas de rupture du circuit.

D'autres avantages et caractéristiques apparaîtront plus clairement à la lecture de la description suivante de l'invention, se référant aux dessins annexés sur lesquels :
- la figure 1 est une vue en perspective de la solution de l'état de la technique avec des câbles disposés en vague ;
- la figure 2 est une vue schématique en perspective d'une conduite à double enveloppe équipée de câbles conformes à l'invention ;
- la figure 3 est une vue en coupe d'une variante de la conduite de la figure 2 ;
- la figure 4 est une vue en coupe d'un câble chauffant applicable à la présente invention ;
- la figure 5 est une vue en perspective du même câble chauffant constitués de la tresse et de deux gaines externes ;
- la figure 6 est une vue en coupe d'une conduite à simple enveloppe ;
- la figure 7 montre un dispositif d'étanchéité de l'annulaire d'une conduite à double enveloppe conforme à l'invention ;
- la figure 8 montre le même dispositif d'étanchéité une fois placé dans l'annulaire d'une conduite à double enveloppe ;
- Les figures 9 et 10 illustrent une boîte de connexion dite "intelligente" associée au circuit électrique d'alimentation d'une conduite de l'invention, d'une part dans un état de fonctionnement normal et d'autre part dans un état consécutif à une avarie électrique.

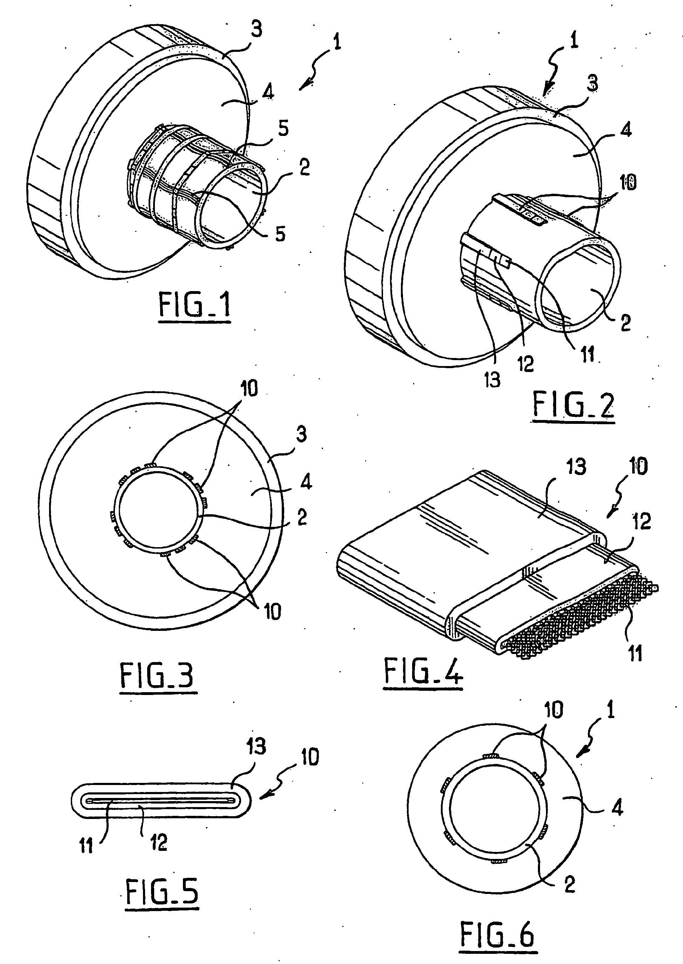

Les figures 2 et 3 montrent une conduite à double enveloppe 1 qui comprend le tube intérieur 2 de transport d'hydrocarbures et le tube porteur extérieur 3. Dans l'exemple de réalisation représenté, l'espace annulaire séparant les tubes est rempli d'une matière d'isolation thermique 4 disposée de la manière la plus appropriée en bandes, en blocs, en mousse, etc. On n'a pas représenté les dispositifs annexes à la conduite, également disposés dans l'annulaire, tels que les espaceurs ou les limiteurs de propagation de déformation radiale, on n'a pas non plus représenté les dispositifs de connexion entre les tronçons de conduite rigide. Tout ceci est bien connu en soi.

Conformément à l'invention, on dispose le long d'au moins une génératrice du tube intérieur 2 de la conduite, un câble électrique 10 choisi pour ses capacités d'élongation égales ou supérieures à 0,5% et susceptible de chauffer par effet Joule lors du passage d'un courant approprié.

La figure 2 montre plusieurs câbles 10 régulièrement répartis à la périphérie du tube intérieur. Selon la figure 3, les câbles sont répartis en quatre groupes de trois câbles 10. Ce système en étoile ou système triphasé flottant permet d'éviter l'utilisation d'un câble de retour, cela permet donc pour une tension donnée le dégagement d'une puissance thermique maximale. D'autres dispositions sont possibles.

Comme le montrent les figures 4 et 5, le câble 10 est constitué d'une tresse métallique 11, par exemple en cuivre, prenant une forme aplatie (celle d'un ruban tressé ou celle d'un tube aplati si la tresse est réalisée de manière tubulaire) constituant l'âme du câble 10, entourée de deux gaines d'isolation électrique 12, 13 ayant néanmoins de bonnes qualités de conduction thermique. L'isolant doit être assez élastique (mais un taux d'allongement de 2 à 4% est suffisant, ce qui est une qualité facile à obtenir pour une matière plastique) pour pouvoir accompagner l'allongement possible de la tresse sur l'extrados de la conduite lorsqu'elle est courbée. On pourrait avoir deux tresses métalliques superposées l'une sur l'autre de manière à augmenter la section transversale des éléments chauffants.

Les éléments allongés chauffants formant le ruban tressé peuvent être réalisés à partir de bandes (bandelettes) de cuivre ou d'aluminium ou être formés par des fils de cuivre recouverts d'étain et/ou de nickel par exemple. L'angle de tressage est compris entre 30° et 60° et peut être avantageusement choisi égal à 45°. Le diamètre des fils formant la tresse ou l'épaisseur de bandelettes est compris entre 0,05 mm et 1,5 mm. L'épaisseur est choisie préférentiellement à 0,15mm pour les fils de cuivre, tandis que pour des bandelettes (fils plats) d'aluminium, l'épaisseur préférentielle est de 0,4 mm. Ces dimensions permettent de réduire les espaces entre les éléments allongés afin d'avoir une compacité optimum de la tresse tout en conservant une bonne tenue mécanique du câble chauffant obtenu. Selon un mode de réalisation préférentiel du câble, la tresse est entourée de deux gaines réalisées en polychlorure de vinyle (PVC), en thermoplastique élastomère (TPE) ou en caoutchouc siliconé. L'épaisseur des gaines est préférentiellement de l'ordre de 1 mm, la gaine interne pouvant avoir une épaisseur plus importante que la gaine externe. La gaine interne est avantageusement en contact intime avec la tresse afin de renforcer le transfert par conduction de la chaleur de la tresse vers l'extérieur de la gaine externe. La rigidité respective des matériaux constituant les gaines sera choisie pour favoriser le retour élastique du câble tressé vers sa position initiale.

La taille des câbles chauffants plats (leur largeur est avantageusement comprise entre 15 et 50 mm), leur nombre et leur disposition dans l'annulaire sont choisis en fonction de l'application spécifique (conditions d'utilisation, température du fluide transporté, configuration du champ, dimension de la conduite, ...).

Avantageusement, les gorges disposées dans l'isolant thermique pour loger le câble ont une forme complémentaire de celle du câble, augmentant ainsi le volume de matériau isolant contenu dans l'annulaire par rapport à des conduites de même diamètre utilisant des câbles chauffants disposés en vague où la largeur des gorges est plus importante.

La figure 6 montre une conduite à simple enveloppe ou tube 2 entourée d'un revêtement d'isolant 4. Le ou les câbles sont disposés à la périphérie du tube 2, le long de génératrices.

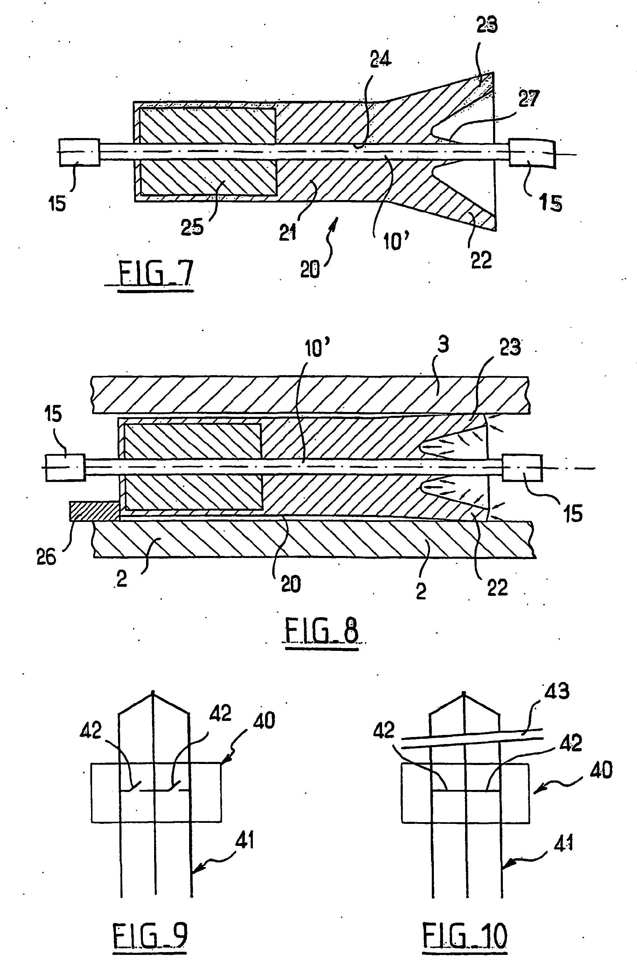

Les figures 7 et 8 représentent un dispositif d'étanchéité 20 ("waterstop") spécialement conçu pour les conduites à double enveloppe de l'invention afin de permettre le passage des câbles chauffants 10. Le dispositif annulaire 20 est formé d'un corps globalement torique 21 en plastique (polyuréthanne) comportant d'un côté deux lèvres d'étanchéité annulaires respectivement interne 22 et externe 23 et de l'autre côté un insert rigide 25, par exemple métallique. Le côté comportant cet insert 25 est destiné à venir en butée dans l'annulaire sur une pièce de butée 26, telle qu'une pièce forgée liée au tube interne 2 (ou au tube externe) de manière à assurer le positionnement longitudinal du dispositif d'étanchéité lorsque l'eau envahit l'annulaire et vient pousser le dispositif 20 sur le côté muni de lèvres 22, 23. Ces lèvres 22, 23, outre qu'elles ont déjà une tendance naturelle à appuyer sur les parois de l'annulaire en raison de leur géométrie naturelle qui les force à être contraintes dans ledit annulaire, subissent de la part de l'eau qui exerce sa pression sur le dispositif 20 des forces supplémentaires de placage contre les parois de l'annulaire (forces symbolisées par les flèches de la figure 8), renforçant ainsi l'étanchéité. Les dispositifs d'étanchéité 20 sont disposés par paire, tête bêche, de manière à arrêter l'eau dans les deux sens. Ils sont régulièrement répartis longitudinalement dans l'annulaire des conduites à double enveloppe 1. Plusieurs sections 10' de câble chauffant traversent chaque dispositif 20 au niveau de plusieurs alésages 24 répartis angulairement sur le tour du dispositif selon une répartition prédéterminée. Des lèvres annulaires 27 sont formée, du même côté, à la sortie de chaque alésage 24 destiné à recevoir la section 10' de câble chauffant. Les sections de câble 10' sont collées dans les alésages 24 de manière étanche. Les sections de câble 10' comportent de part et d'autre un connecteur 15 pour les relier au reste du câble chauffant. Il est possible de prévoir des moyens d'évacuation de la chaleur pour éviter les problèmes de surchauffe locale des câbles chauffants à l'intérieur du dispositif 20 qui pourrait entraîner un vieillissement ou d'autres inconvénients. De tels moyens peuvent consister en un pont thermique interne établi entre les câbles chauffants et une zone de l'alésage du dispositif 20 pour évacuer les calories excédentaires vers le tube interne 2.

La conduite de l'invention comporte avantageusement, de place en place, des dispositifs de connexion dits "intelligents". Un tel dispositif est destiné, en cas d'avarie sur la conduite (par exemple l'inondation de l'annulaire dans le cas d'une conduite à double enveloppe), à maintenir la connexion électrique et donc le chauffage sur la partie amont de la conduit par rapport à l'avarie. Lorsque la conduite peut être alimentée électriquement sur les deux côtés (présence d'un ombilical d'alimentation alimentant l'extrémité sous-marine), ces dispositifs peuvent permettre de maintenir le chauffage des deux côtés de la partie subissant l'avarie. Ces dispositifs peuvent être installés entre les deux dispositifs d'étanchéité d'une même paire décrits plus haut. Les figures 9 et 10 illustrent le principe d'une boîte de connexion "intelligente" 40 disposée sur la ligne d'alimentation triphasée 41 d'un système en étoile. En fonctionnement normal, au niveau de la boîte 40, les trois phases ne sont pas connectées, les interrupteurs 42 sont ouverts. En cas de rupture 43 du circuit électrique, la boîte 40 ferme automatiquement les interrupteurs 42 ce qui connecte les phases et rétablit le circuit électrique du côté amont de l'avarie 43. Ceci permet de maintenir le chauffage et donc permet de planifier la réparation de l'avarie avec plus de souplesse.

## Revendications

1. Conduite (1) rigide de transport d'hydrocarbures à double enveloppe constituée de deux tubes coaxiaux respectivement intérieur (2) et extérieur (3) séparés par un espace annulaire, cette conduite (1) comprenant au moins un câble électrique de chauffage (10) disposé dans ledit espace, **caractérisé en ce que** la conduite (1) est du type enroulable et ledit câble (10) est apte à subir un allongement d'au moins 0,5 % sans endommagement lors d'un enroulement de la conduite.

2. Conduite selon la revendication 1, **caractérisée en ce que** les matériaux constituant le câble (10) se déforment élastiquement en restant en dessous de 15% de leur limite élastique et préférentiellement en dessous de 5%.

3. Conduite selon l'une quelconque des revendications 1 ou 2, **caractérisée en ce que** ledit câble (10) est disposé parallèlement à l'axe longitudinal de la conduite (1).

4. Conduite selon la revendication 3, **caractérisée en ce que** ledit câble (10) est disposé le long d'une génératrice du tube intérieur (2).

5. Conduite selon l'une quelconque des revendications 1 à 4, **caractérisée en ce que** ledit câble (10) est un câble plat.

6. Conduite selon l'une quelconque des revendications 1 à 5, **caractérisée en ce que** ledit câble (10) est un câble à tresse conductrice centrale (11).

7. Conduite selon la revendication 6, **caractérisée en ce que** la tresse (11) est entourée d'au moins une gaine (12) d'isolation électrique.

8. Conduite selon l'une quelconque des revendications précédentes, **caractérisée en ce qu'**il s'agit d'une conduite à double enveloppe et **en ce que** des dispositifs d'étanchéité (20) de l'espace annulaire entre les tubes coaxiaux (2, 3) sont agencés pour recevoir des sections (10') de câble chauffant.

9. Conduite selon l'une quelconque des revendications précédentes, **caractérisée en ce qu'**il est prévu de place en place sur le circuit d'alimentation électrique associée à la conduite des boîtes de connexion (40) rétablissant automatiquement localement la connexion entre phases en cas de rupture du circuit.

## Claims

1. A rigid double-walled pipe (1) for transporting hydrocarbons, constituted by two coaxial tubes, these being an inner (2) and outer (3) tube respectively, which are separated by an annular space, this pipe (1) including at least one electric heating cable (10) arranged in said space, **characterised in that** the pipe (1) is of the type able to be coiled and the said cable (10) is capable of being extended by at least 0.5% without being damaged during a colling of the pipe.

2. The pipe according to claim 1, **characterised in that** the materials constituting the cable (10) are elastically deformed whilst remaining below 15% of their elastic limit and preferably below 5%.

3. The pipe according to any one of claims 1 or 2, **characterised in that** the said cable (10) is arranged parallel to the longitudinal axis of the pipe (1).

4. The pipe according to claim 3, **characterised in that** the said cable (10) Is arranged along a generator of the inner tube (2).

5. The pipe according to any one of claims 1 to 4, **characterised in that** the said cable (10) is a flat cable.

6. The pipe according to any one of claims 1 to 5, **characterised in that** the said cable (10) is a cable with a central conducting braid (11).

7. The pipe according to claim 6, **characterised in that** the braid (11) is surrounded by at least one electrical insulation sheath (12).

8. The pipe according to any one of the preceding claims, **characterised in that** it is a double-walled pipe and **in that** the sealing devices (20) for the annular space between the coaxial tubes (2, 3) are arranged in order to receive the heating cable sections (10').

9. The pipe according to any one of the preceding claims, **characterised in that** connection boxes (40), which automatically locally re-establish the connection between phases if the circuit is broken, are provided at different points on the power supply circuit associated with the pipe.

## Patentansprüche

1. Steife Leitung (1) für den Transport von Kohlenwasserstoffen mit doppelter Ummantelung, bestehend aus zwei koaxialen Rohren, einem inneren (2) und einem äußeren (3), die über einen ringförmigen Raum voneinander getrennt sind, wobei diese Leitung (1) zumindest ein elektrisches Heizkabel (10) aufweist, das in diesem Raum angeordnet ist, **dadurch gekennzeichnet, dass** die Leitung (1) eine aufrollbare Leitung ist und dass das Kabel (10), bei einem Aufrollen der Leitung um mindestens 0,5% verlängerbar ist, ohne beschädigt zu werden.

2. Leitung nach Anspruch 1, **dadurch gekennzeichnet, dass** die Materialien, aus denen das Kabel besteht (10), sich elastisch verformen, indem sie unterhalb von 15% und vorzugsweise unter 5% ihrer Elastizitätsgrenze bleiben.

3. Leitung nach einem der Ansprüche 1 bis 2, **dadurch gekennzeichnet, dass** das Kabel (10) parallel zu der Längsachse der Leitung (1) angeordnet ist.

4. Leitung nach Anspruch 3, **dadurch gekennzeichnet, dass** das Kabel (10) entlang einer Mantellinie des inneren Rohrs (2) angeordnet ist.

5. Leitung nach einem der Ansprüche 1 bis 4, **dadurch gekennzeichnet, dass** das Kabel (10) ein Flachkabel ist.

6. Leitung nach einem der Ansprüche 1 bis 5, **dadurch gekennzeichnet, dass** das Kabel (10) ein Kabel mit mittigem Leitergeflecht (11) ist.

7. Leitung nach Anspruch 6, **dadurch gekennzeichnet, dass** das Geflecht (11) von mindestens einem elektrisch isolierenden Mantel (12) umgeben ist.

8. Leitung nach einem der vorangegangenen Ansprüche, **dadurch gekennzeichnet, dass** die Leitung eine doppelte Ummantelung aufweist und dass die Vorrichtungen zur Abdichtung (20)des ringförmigen Raums zwischen den koaxialen Rohren (2, 3) für die Aufnahme von Abschnitten (10') des Heizkabels ausgebildet sind.

9. Leitung nach einem der vorangegangenen Ansprüche, **dadurch gekennzeichnet, dass** an der Stromversorgungsleitung, die mit der Leitung verbunden ist, stellenweise Klemmenkästen (40) vorgesehen sind, die bei einem Leitungsbruch lokal die Verbindung zwischen den Phasen automatisch wiederherstellen.
